# EUROPEAN PATENT SPECIFICATION

(11) **EP 2 410 184 B1**
(45) Date of publication and mention of the grant of the patent: **01.05.2013**
(21) Application number: 11155766.6
(22) Date of filing: 24.02.2011
(51) Int. Cl.: F04D 19/04, F04D 29/66, F16F 15/02

(54) **Vibration damper for vacuum pumps**
Vibrationsdämpfer für Vakuumpumpen
Amortisseur de vibrations pour pompes sous vide

(30) Priority: 16.04.2010 IT TO20100313
(43) Date of publication of application: 25.01.2012
(73) Proprietor: Agilent Technologies, Inc., Santa Clara, CA 95051 (US)
(72) Inventor: Giors, Silvio, 10072 Caselle (IT); Bonmassar, Luca, Loveland, CO 80537-0599 (US); Quartarone, Carmelo, 96100 Siracusa (IT); Pandolfo, Vincenzo, 10137 Torino (IT)
(74) Representative: Zimmermann, Tankred Klaus

(56) References cited:
- EP-A1- 1 533 530
- EP-A1- 1 715 190
- WO-A1-2008/111335
- DE-A1-102004 044 775

## Description

### Technical Field of the Invention

The present invention relates to a vibration damper for vacuum pumps, in particular turbomolecular vacuum pumps.

More precisely, the present invention relates to a vibration damper preventing transmission of vibrations generated by the rotation of the rotor of a vacuum pump to the chamber where vacuum conditions are to be established.

### Prior art

EP 1 533 530 A is considered as the closest prior art to the subject-matter of claim 1.

As known, several applications exist in which the chamber where vacuum conditions are to be established and to which a turbomolecular vacuum pump is connected to this end is particularly sensitive to the vibrations unavoidably induced by the rotation of the pump rotor. Among such applications, one may mention by way of example the manufacture of electron microscopes or the testing and repair of masks for manufacturing integrated electronic circuits.

In order to reduce transmission of mechanical vibrations from the vacuum pump to the vacuum chamber, vacuum pumps are generally equipped with a vibration damper interposed between the pump itself and the vacuum chamber.

According to the prior art, said vibration dampers have a first flange for connection to the vacuum chamber, a second flange for connection to the vacuum pump, a flexible bellows made of steel for ensuring the vacuum tightness and the structural resistance of the damper to torsion, and one or more components made of rubber, arranged around said bellows, in order to ensure damping of the vibrations generated by the vacuum pump.

The damping factor attainable with a damper of the kind described above is of the order of 10 to 100, what can be insufficient for applications demanding a particular precision.

In order to improve the damping factor and to obtain an effective vibration damping at several frequencies, it is possible to use two dampers of the kind described above, arranged in series and connected by an annular member of considerable mass, made for instance of steel. The provision of such a mass between the two dampers arranged in series allows obtaining a vibration damping system that can be modelled with a two-pole transfer function and enables an effective vibration damping at different frequencies. In particular, it is possible to obtain a good vibration damping both at the rotation frequency of the pump rotor and at the rotation frequency of the cage of the bearings on which the rotation axis of the pump is mounted, the rotor and the cage being the two pump vibration sources to which the system is more sensitive.

Moreover, the double damper described above allows considerably improving vibration damping, by increasing the damping factor up to values of the order of 10³.

Yet, also these so-called double dampers are not without drawbacks.

First, in both the single and the double dampers, using different members to ensure the vacuum tightness (the bellows) and to achieve vibration damping and ensure rigidity to the structure (the rubber member(s)) entails a high number of components and, consequently, considerable production costs and high risks of breaking or malfunction.

Second, if on the one hand the single dampers give an unsatisfactory damping factor, on the other hand the double dampers entail large axial sizes, which make them unsuitable for applications in which use of compact devices is required. Moreover, the low conductance resulting from the great axial size entails a reduction of the actual pumping speed of the pump/damper system.

It is the main object of the present invention to overcome the above drawbacks, by providing a vibration damper for vacuum pumps that ensures a satisfactory damping factor. Preferably the vibration damper comprises a limited number of components easy to be produced, and/or has a reduced axial size and an increased overall conductance.

### Description of the Invention

The invention is defined in claim 1.

Particular embodiments are set out in the dependent claims.

The above object is achieved by the vibration damper according to the invention because the vacuum tightness function and the vibration damping function are both performed by a single member, a toroidal ring of elastic material, preferably an O-ring made of an elastomer.

Thanks to this feature, it is possible both to limit the number of components of the damper, and to reduce its overall axial size.

According to an embodiment of the invention, the vibration damper includes at least a first component connectable to or integral with a vacuum pump, and a second component connectable to or integral with a vacuum chamber.

Said first and second components are equipped with connecting means for their mutual connection and are both equipped with a respective toroidal semi-seat, wherein said toroidal semi-seats of said first and second components mutually cooperate to form a toroidal seat when said components are connected together. A toroidal ring of elastic material is located in said toroidal seat and can pass from a first resting configuration, taken when the ring is subjected to a compression force, in a direction substantially parallel to said symmetry axis, which is zero or has a minimum intensity, lower than a pre-set threshold, to a second compressed configuration, taken when the ring is subjected to a compression force, in a direction substantially parallel to said symmetry axis, which has a greater intensity, exceeding said threshold.

Always according to the invention, the vibration damper is so structured that said first and second components are mutually in contact when said elastic toroidal ring is in said first resting configuration and said connecting means of the first and second components serve to retain said components relative to each other, whereas said components are not in contact and are wholly separated by said elastic toroidal ring when said elastic toroidal ring is in said second, compressed configuration.

In particular, when the vacuum pump is operating, the suction force itself of the pump generates a compression force allowing exceeding said threshold and compressing and deforming the elastic ring, so that the two components are no longer in contact.

In a preferred embodiment of the invention, said connecting means comprise teeth that preferably are equally spaced along the circumference of said first and second components, in such a manner that said first and second components can be fit onto each other and then, through a simple rotation, can be locked to each other thanks to the provision of said teeth that abut against one another thereby forming a bayonet coupling.

Preferably, once the first and second components have been connected, means for preventing a subsequent relative rotation of said two components are applied between consecutive tooth pairs, in order to avoid disassembling and to ensure resistance to a twisting torque.

In particular said means ensure the structural integrity and, consequently, the safety of the pump/damper system in case the pump breaks, in that they oppose to the rotation induced by the rapid shutdown torque of the pump itself.

According to a preferred embodiment of the invention, at least one intermediate component is also arranged between the first and second components of the damper, and a first elastic toroidal ring is interposed between the first component and the intermediate component, and a second elastic toroidal ring is interposed between said intermediate component and said second component. Preferably, said at least one intermediate component has a considerable mass if compared to said first and second components of the damper and is made for instance of steel.

In this way, a double damper is obtained.

### Brief Description of the Drawings

Further advantages and features of the vibration damper according to the invention will become more apparent from the following description, given by way of non-limiting example with reference to the accompanying drawings, in which:
- Fig. 1A: is a perspective view of a vibration damper according to a first embodiment of the invention;
- Fig. 1B: is a is an exploded perspective view of a section of the vibration damper shown in Fig. 1A;
- Fig. 1C: is a cross-sectional view of the vibration damper shown in Fig. 1A;
- Fig. 1D: is an enlarged detail of Fig. 1C showing the vibration damper under atmospheric pressure conditions;
- Fig. 1E: is an enlarged detail of Fig. 1C showing the vibration damper under vacuum conditions;
- Fig. 1F: is an enlarged detail of a cross-sectional view of a vibration damper according to an alternative variant of said fist embodiment of the invention, showing the vibration damper under vacuum conditions;
- Fig. 2: is a cross-sectional view of a vibration damper according to a second preferred embodiment of the invention;
- Fig. 3: is a cross-sectional view of a vibration damper according to a third preferred embodiment of the invention;
- Fig. 4: is a cross-sectional view of a vibration damper according to a fourth preferred embodiment of the invention; and
- Fig. 5: is a cross-sectional view of a vibration damper according to a fifth preferred embodiment of the invention.

### Description of Preferred Embodiments of the Invention

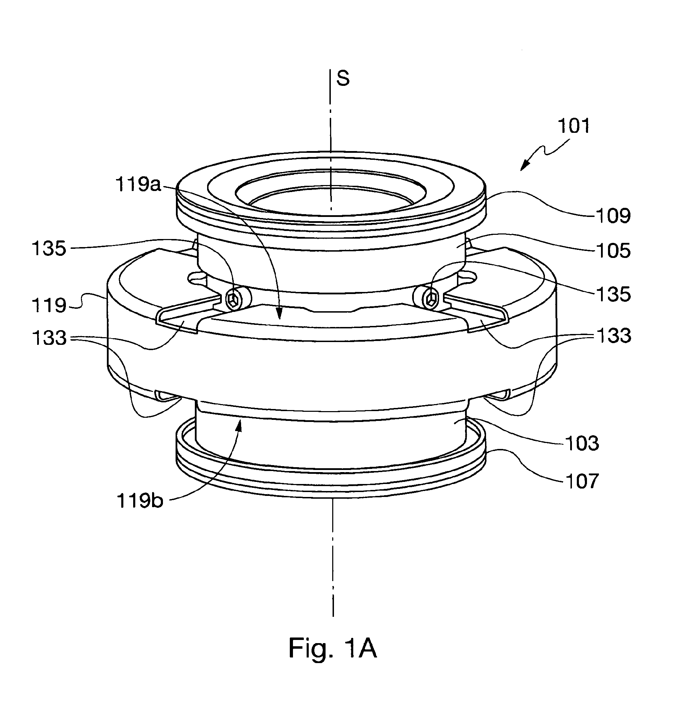

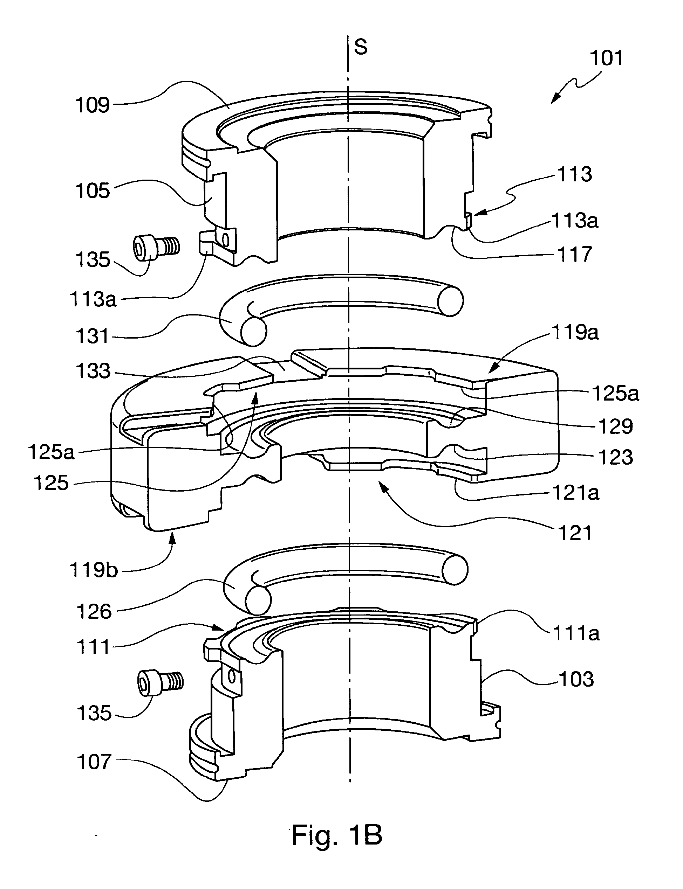

Referring to Figs. 1A to 1E, there is shown a vibration damper 101 according to a first embodiment of the invention.

Damper 101 comprises a first cylindrical hollow component 103, preferably made of metal, and a second cylindrical hollow component 105, it too preferably made of metal, which are axially aligned along an axis of symmetry S.

The first component 103 has a flange 107 for connection to the connection flange of a vacuum pump at one end, and connecting means 111 at the opposite end. More in detail, said connecting means 111 comprise radial teeth 111a that extend radially outwards from the external wall of the first component 103 and are equally spaced along the circumference of said external wall.

Similarly, the second component 105 has a flange 109 for connection to the connection flange of a vacuum chamber at one end, and connecting means 113 at the opposite end. More in detail, said connecting means 113 comprise radial teeth 113a that extend radially outwards from the external wall of the second component 105 and are equally spaced along the circumference of said external wall.

The first component 103 further comprises a toroidal semi-seat 115 at the end where said connecting means 111 are formed. Similarly, the second component 105 further comprises a toroidal semi-seat 117 at the end where said connecting means 113 are formed.

According to the preferred embodiment shown in Figs. 1A to 1E, vibration damper 101 further includes a cylindrical hollow intermediate component 119, it too preferably made of metal and aligned along axis of symmetry S. Said intermediate component has a considerable mass if compared with said first and second components and is preferably made of steel or the like.

Said intermediate component 119 has, at a first end, connecting means 121 arranged to be coupled with said connecting means 111 of the first component 103 for connecting said first component 103 to said intermediate component 119. More particularly, said connecting means 121 comprise radial teeth 121a that extend radially inwards from the internal wall of intermediate component 119 and are equally spaced along the circumference of said internal wall.

Moreover, a toroidal semi-seat 123 is formed on a wall turned towards said first end equipped with said connecting means 121 for connecting intermediate component 119 to the first component 103, and said first component and said intermediate component are so configured that said toroidal semi-seats 115, 123 form a toroidal seat when said first component and said intermediate component are connected, said toroidal seat receiving a first toroidal component 126 made of an elastic material, preferably an elastomer.

Similarly, at the opposite end, said intermediate component 119 has connecting means 125 arranged to be coupled with said connecting means 113 of the second component 105 for connecting said second component 105 to said intermediate component 119. More particularly, said connecting means 125 comprise radial teeth 125a that extend radially inwards from the internal wall of intermediate component 119 and are equally spaced along the circumference of said internal wall.

Moreover, a toroidal semi-seat 129 is formed on a wall turned towards said second end equipped with said connecting means 125 for connecting intermediate component 119 to the second component 105, and said second component and said intermediate component are so configured that said toroidal semi-seats 117, 129 form a toroidal seat when said second component and said intermediate component are connected, said toroidal seat receiving a second toroidal component 131 made of an elastic material.

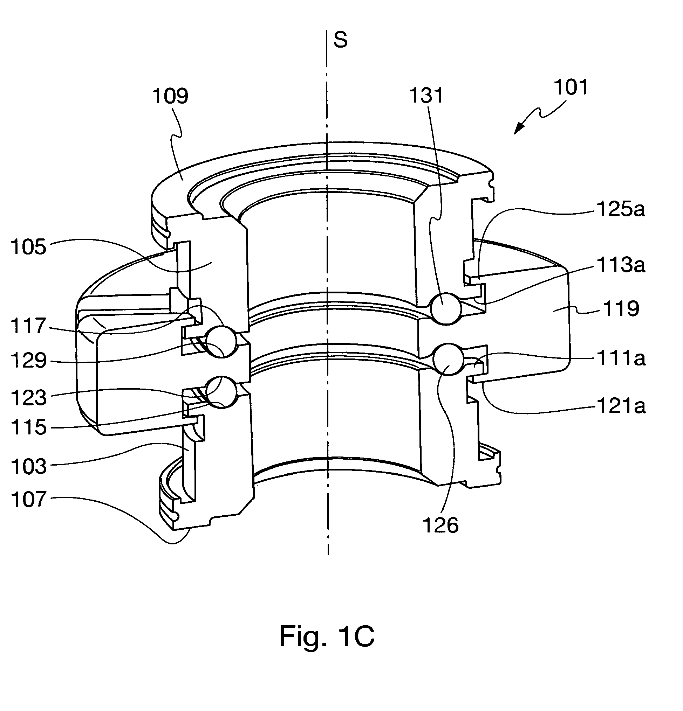

Referring in particular to Fig. 1C, the first component 103 and the intermediate component 119 are connected by means of a bayonet insertion with teeth 111a of the first component 103 offset relative to teeth 121a of intermediate component 119 and a subsequent rotation of said components relative to axis S so as to mutually align said teeth 111a, 121a, whereby they abut against one another and retain said first component and said intermediate component relative to each other. At this point, the first elastic toroidal component 126 is housed and confined within the toroidal seat resulting from the combination of toroidal semi-seats 115, 123 and is subjected to a minimum compression, lower than a predetermined threshold and such as to provide tightness in order to enable evacuation of the vacuum system.

Similarly, the second component 105 and the intermediate component 119 are connected through a bayonet insertion with teeth 113a of the second component 105 offset relative to teeth 125a of intermediate component 119 and subsequent rotation of said components relative to axis S so as to mutually align said teeth 113a, 125a, whereby they abut against one another and retain said second component and said intermediate component relative to each other. At this point, the second elastic toroidal component 131 is housed and confined within the toroidal seat resulting from the combination of toroidal semi-seats 117, 129 and is subjected to a minimum compression, lower than a predetermined threshold, like component 126.

Advantageously, means are provided to prevent a subsequent unintentional and undesired relative rotation that could compromise the connection of said first and second components 103, 105 with said intermediate component 119, thereby compromising the vacuum integrity and the mechanical safety of the system.

To this end, radial recesses 133 are formed on faces 119a, 119b at both ends of intermediate component 119 and, in correspondence of said recesses, pins 135 are secured on said first and second components 103, 105, which pins project from said components and extend into said recesses. In case of an undesired rotation, for instance due to the rapid shutdown torque of the vacuum pump, pins 135 abut against the walls of recesses 133 thereby preventing a further rotation.

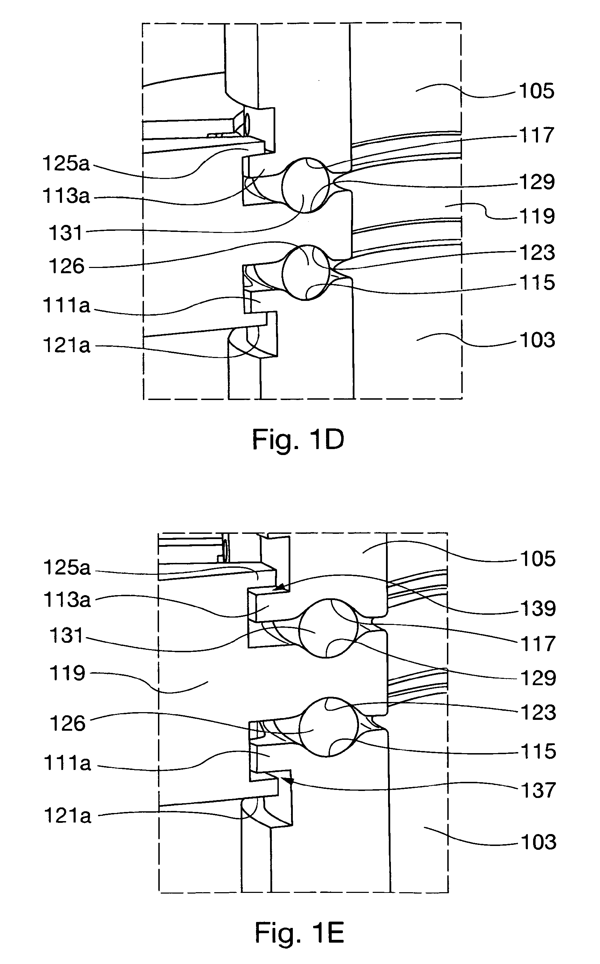

Referring in particular to Figs. 1D and 1E, according to the invention, under atmospheric pressure conditions, elastic toroidal rings 126, 131 are confined in the respective toroidal seats 115, 123 and 117, 129 and are in a first resting condition, since they are subjected to a compression force lower than the predetermined threshold (Fig. 1D).

Under such conditions, teeth 111a of the first component 103 axially abut against teeth 121a of intermediate component 119, and teeth 113a of the second component 105 abut in turn against teeth 125a of intermediate component 119, and in this way they keep the first component 103, the intermediate component 119 and the second component 105 together and slightly pre-compress elastic components 126, 131.

When vacuum is created, elastic toroidal components 126, 131 are subjected to a compression force higher than said predetermined threshold and become deformed, thereby passing from the first resting condition to the second compressed condition (Fig. 1E).

Under such conditions, because of the deformation of elastic toroidal rings 126, 131, teeth 111a of the first component 103 are no longer in contact with teeth 121a of intermediate component 119 and a gap 137 is created between them. Similarly, a gap 139 is created between teeth 113a of the second component 105 and teeth 125a of intermediate component 119.

Consequently, when the vacuum pump is operating and hence mechanical vibrations are generated by the rotation of the rotor of said pump, the first component 103 and the intermediate component 119 are in contact only through the first elastic toroidal ring 126, and the second component 105 and the intermediate component 119 are in contact only through the second elastic toroidal ring 131, said elastic rings 126, 131 ensuring vacuum tightness and vibration damping.

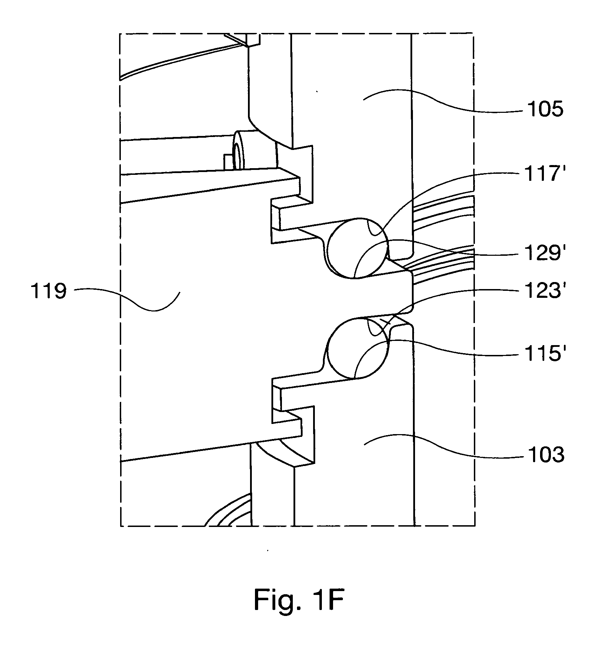

In the example shown, the toroidal semi-seats have a substantially semi-circular profile, so that they create, once they are coupled, a toroidal seat with substantially circular cross-section for the elastic toroidal rings. It will be apparent for the skilled in the art that different profiles and shapes can be chosen for said semi-seats, provided the proper deformation of the elastic toroidal rings is ensured so as to obtain the above result. For instance, referring to Fig. 1F, it is possible to make said toroidal semi-seats with a substantially L-shaped profile and to arrange them in mirroring configuration opposite each other.

Thanks to the absence of any metal-to-metal contact a very high damping factor, in the range 10³ to 10⁴, can be achieved and the vibrations generated by the rotation of the rotor of the pump can be effectively attenuated by such a factor.

Advantageously, the absence of any metal-to-metal contact also entails electrical insulation of vibration damper 101 and, consequently, electrical insulation of the vacuum chamber from the vacuum pump, what can be advantageous in many applications, for instance in electron microscopy. It is to be appreciated that this result cannot be achieved with the conventional dampers, where the bellows, which is necessarily made of metal for structural reasons, cannot perform the function of electrically insulating the vacuum chamber from the vacuum pump.

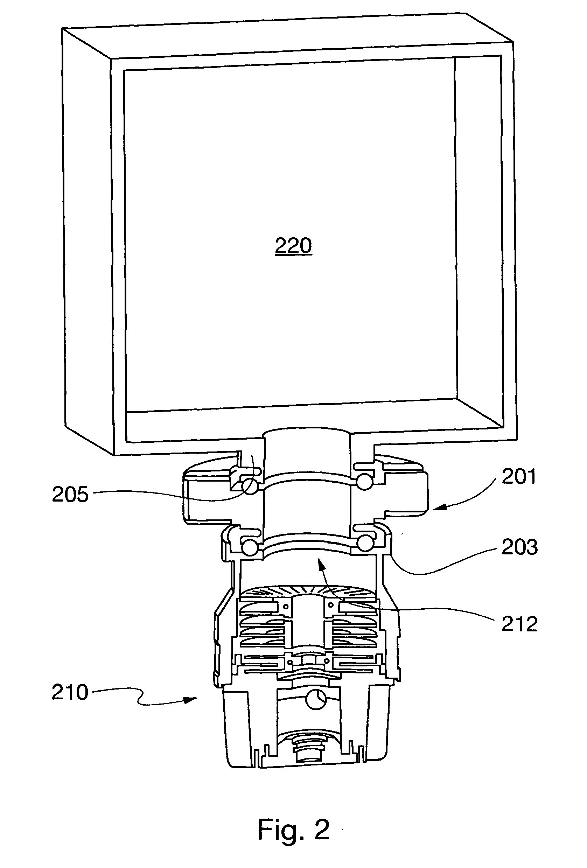

Fig. 2 shows a second embodiment of vibration damper 201 according to the invention.

According to this particular embodiment, the first component 203 of vibration damper 201, instead of being equipped with means for connection to a vacuum pump, is directly integrated with a turbomolecular vacuum pump 210, in correspondence of suction port 212 thereof. Similarly, the second component 205 of vibration damper 201, instead of being equipped with means for connection to a vacuum chamber, is directly integrated with a vacuum chamber 220.

In other words, the connection flange of vacuum pump 210 in correspondence of suction port 212 is shaped and structured so as to act as the first component of vibration damper 201, and the connection flange of vacuum chamber 220 is shaped and structured so as to act as the second component of said vibration damper 201.

Damper 201 according to such a second embodiment advantageously allows a further reduction of the overall axial size.

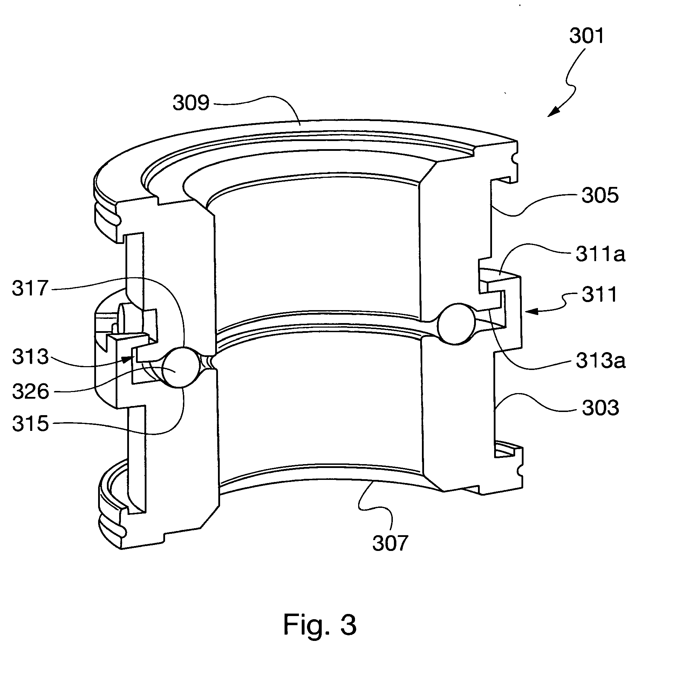

Fig. 3 shows a third embodiment of vibration damper 301 according to the invention, which is particularly simple in that it includes a single elastic ring.

According to this embodiment, the first component 303 of damper 301 has at one end a flange 307 for connection to the flange of a vacuum pump and, at the opposite end, a first toroidal semi-seat 315 for toroidal ring 326 of elastic material and connecting means 311 for connection to the second component 305 of damper 301, said connecting means comprising radial teeth 311 a that extend radially inwards from the internal surface of the first component 303. Similarly, the second component 305 of damper 301 has at one end a flange 309 for connection to the flange of a vacuum chamber and, at the opposite end, a second toroidal semi-seat 317 for toroidal ring 326 of elastic material and connecting means 313 for connection to the first component 303 of damper 301, said connecting means 313 comprising radial teeth 313a that extend radially outwards from the external surface of the second component 305.

Thus, according to this third embodiment of the invention, the first and second components 303, 305 of damper 301 are directly connected to each other, without the interposition of any intermediate component, and a single toroidal ring 326 of elastic material is provided, which is housed and confined in the toroidal housing resulting from the combination of toroidal semi-seats 315, 317.

The operation of vibration damper 301 is quite similar to what has been described above in connection with the first embodiment of the invention.

The absence of the intermediate component and the provision of a single elastic toroidal ring do not allow obtaining a two-pole transfer function. Yet, vibration damper 301 according to this third embodiment of the invention allows obtaining a damping factor equal to or higher than that of a conventional single damper, as well as the electrical insulation of the vacuum chamber from the vacuum pump and a reduced axial size.

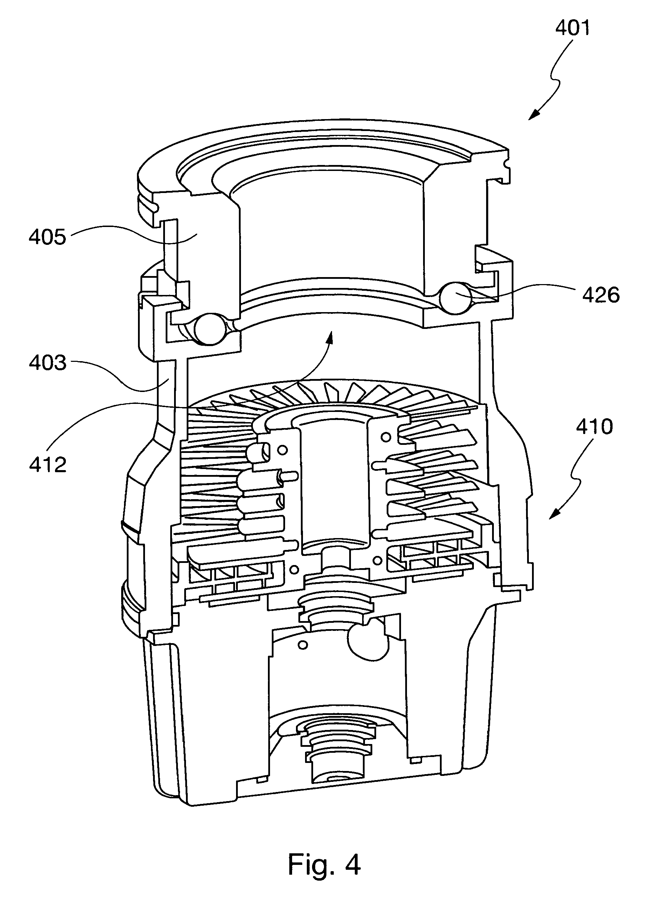

Fig. 4 shows a fourth embodiment of vibration damper 401 according to the invention.

Also in this embodiment, a single elastic toroidal ring 426 is provided and the first component 403 of the damper is directly connected to the second component 405 of said damper, without the interposition of any intermediate component. Yet, in this embodiment, the first component 403 of damper 401, instead of being equipped with means for connection to a vacuum pump, is directly integrated with a turbomolecular vacuum pump 410, in correspondence of suction port 412 thereof.

In other words, the connection flange of vacuum pump 410 in correspondence of suction port 412 is shaped and structured so as to act as the first component of vibration damper 401.

This feature advantageously allows a further reduction of the overall axial size.

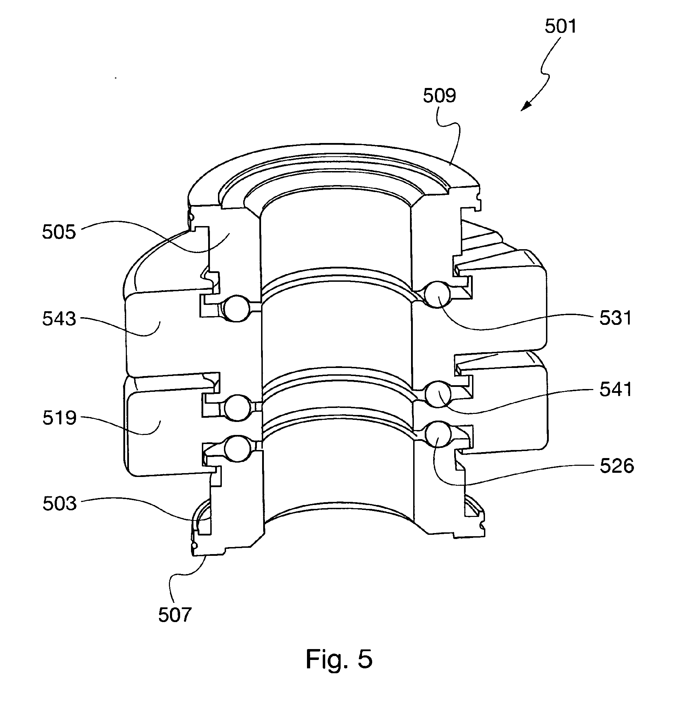

Fig. 5 shows a fifth embodiment of vibration damper 501 according to the invention.

This embodiment includes a further intermediate component between the first and second components of damper 501 and, correspondingly, a further toroidal ring of elastic material.

Thus, damper 501 includes a first component 503 equipped with a flange 507 for connection to a vacuum pump and a second component 505 equipped with a flange 509 for connection to a vacuum chamber.

The first component 503 is connected to a first intermediate component 519 through connecting means similar to those previously described and with the interposition of a first elastic toroidal ring 526, which is housed and confined in a toroidal housing resulting from the combination of toroidal semi-seats formed in said first component and said first intermediate component.

The first intermediate component 519 is connected to a second intermediate component 543 through connecting means similar to those previously described and with the interposition of a second elastic toroidal ring 541, which is housed and confined in a toroidal housing resulting from the combination of toroidal semi-seats formed in said first and second intermediate components.

The second intermediate component 543 is connected to the second component 505 through connecting means similar to those previously described and with the interposition of a third elastic toroidal ring 531, which is housed and confined in a toroidal housing resulting from the combination of toroidal semi-seats formed in said second intermediate component and said second component.

Of course, any number of intermediate components can be inserted between the first and the second component of the vibration damper according to the invention.

As the number of said intermediate components increases, on the one hand also the number of frequencies at which an effective damping of the vibrations generated by the vacuum pump can be obtained increases, but on the other hand also the overall axial size increases.

It is clear from the above description that the invention attains the object set forth above, in that it provides a vibration damper for vacuum pumps which is simple and compact, easy and cheap to be manufactured and capable of ensuring a damping factor that can easily be of the order of 10³ and, with a particular care in the design, can be up to 10⁴.

It is also clear that the detailed description of some preferred embodiments given above is in no way to be intended in a limiting sense and that several changes and modifications are possible without departing from the scope of the present invention, as defined in the appended claims.

## Claims

1. Vibration damper (101; 201; 301; 401; 501), intended to be arranged between a vacuum pump (210) and a vacuum chamber (220), comprising at least:
a first cylindrical hollow component (103; 203; 303; 403; 503), arranged for being associated at a first end thereof to said vacuum pump; and
a second cylindrical hollow component (105; 205; 305; 405; 505), aligned to said first element (103; 203; 303; 403; 503) in the axial direction along a symmetry axis (S) and arranged for being associated at a first end thereof to said vacuum chamber; wherein
said first component (103; 203; 303; 403; 503) comprising, at the end opposite to said first end, a toroidal semi-seat (115; 115'; 315) and connecting means (111; 311) suitable for axially binding said first component to said second component, either directly or indirectly through the interposition of one or more possible intermediate components (119; 419,431), and
said second component (105; 205; 305; 405; 505) comprising, at the end opposite to said first end, a toroidal semi-seat (117; 117'; 317) and connecting means (113; 313) suitable for axially binding said second component to said first component, either directly or indirectly through the interposition of one or more possible intermediate components (119; 419,431),
at least a toroidal ring (126; 326; 426; 526) made of an elastic material being arranged between said first and said second component (103; 203; 303; 403; 503 / 105; 205; 305; 405; 505) of said damper,
said toroidal ring made of an elastic material passing from a first resting configuration if subjected to a compression force directed along said symmetry axis (S) lower than a pre-set threshold to a second compressed configuration if subjected to a compression force directed along said symmetry axis (S) greater than said pre-set threshold,
**characterized in that**
said connecting means (111; 311 / 113; 313) guarantee the axial connection between said first and said second component (103; 203; 303; 403; 503 / 105; 205; 305; 405; 505) when said elastic toroidal ring (126; 326; 426; 526) is in said first resting configuration; and **in that**
said toroidal ring (126; 326; 426; 526) made of an elastic material is deformed and guarantees the vacuum-tight axial connection between said first and said second component and prevents any contact between said connecting means of said first and said second component when said elastic toroidal ring is in said second compressed configuration.

2. Vibration damper (301; 401) according to claim 1, wherein only said elastic toroidal ring (326; 426) is arranged between said first and said second component (303; 403 / 305; 405), whereby said toroidal semi-seat (315) of said first component and said toroidal semi-seat (317) of said second component co-operate for defining a toroidal seat in which said toroidal ring (326; 426) made of an elastic material is received and confined.

3. Vibration damper (301; 401) according to claim 2, wherein
said first component (303; 403) comprises connecting means (311) for the connection to said second component (305; 405),
said connecting means comprising radial teeth (311 a), equally spaced along the surface of said first component, and wherein
said second component comprises connecting means (313) for the connection to said first component, said connecting means comprising radial teeth (313a), equally spaced along the surface of said second component and suitable for engaging said radial teeth of said first component.

4. Vibration damper (301; 401) according to claim 2 or 3, further comprising means for preventing the accidental rotation of said first component (303; 403) with respect to said second component (305; 405).

5. Vibration damper (101; 201; 501) according to claim 1, wherein one or more intermediate components (119; 419,431) together with an additional toroidal ring (131; 531,541) made of an elastic material for each of said intermediate components are further arranged between said first and said second component.

6. Vibration damper (101; 201; 501) according to claim 5, wherein
each of said intermediate components (119; 419,431) comprises a first toroidal semi-seat (123; 123') oriented towards a first end of said intermediate element and a second toroidal semi-seat (129; 129') oriented towards a second end of said intermediate element,
each of said first and second toroidal semi-seats (123; 123' / 129; 129') being suitable for co-operating with the toroidal semi-seat of said first component (103; 203; 503) or with the toroidal semi-seat of said second component (105; 205; 505) or with the toroidal semi-seat of another intermediate component (119; 419,431) for defining a toroidal seat arranged for receiving and confining one of said toroidal rings made of an elastic material.

7. Vibration damper (101; 201; 501) according to claim 5,
wherein said first component (103; 203; 503) comprises connecting means (111) for the connection to one of said intermediate components, said connecting means comprising radial teeth (111a), equally spaced along the surface of said first component,
wherein said second component (105; 205; 505) comprises connecting means (113) for the connection to one of said intermediate components, said connecting means comprising radial teeth (113a), equally spaced along the surface of said second component, and
wherein said intermediate components (119; 419,431) comprise
at said first end first connecting means (121) comprising radial teeth (121a), equally spaced along the surface of said intermediate component and suitable for engaging said radial teeth of said first component or of another intermediate component, and
at said second end second connecting means (125) comprising radial teeth (125a), equally spaced along the surface of said intermediate component and suitable for engaging said radial teeth of said second component or of another intermediate component.

8. Vibration damper (101; 201; 501) according to any of the claims 5 to 7, further comprising means for preventing the accidental mutual rotation of said first component, said second component and said on or more intermediate components with respect to each other.

9. Vibration damper (101; 301; 501) according to any of the claims 1 to 8, wherein said first component (103; 303; 503) comprises a flange (107) for the connection to a or said vacuum pump.

10. Vibration damper (201; 401) according to any of the claims 1 to 8, wherein said first component (203; 403) is integral with said vacuum pump (210, 410).

11. Vibration damper (101; 301; 401; 501) according to any of the claims 1 to 10, wherein said second component (105; 305; 405; 505) comprises a flange (109; 309; 509) for the connection to a or said vacuum chamber.

12. Vibration damper (201) according to any of the claims 1 to 10, wherein said second component (205) is integral with said vacuum chamber (220).

13. Vibration damper (101; 201; 301; 401; 501) according to any of the claims 1 to 12, wherein said toroidal semi-seats (115; 117; 123; 129) have a substantially semi-circular profile.

14. Vibration damper (101; 201; 301; 401; 501) according to any of the claims 1 to 12, wherein said toroidal semi-seats (115'; 117'; 123'; 129') have a substantially "L"-shaped profile.

15. Vibration damper (101; 201; 301; 401; 501) according to any of the claims 1 to 14, wherein said pre-set threshold is exceeded and said elastic toroidal ring (126; 326; 426; 526) is in said second compressed configuration when said damper is under vacuum conditions.

## Patentansprüche

1. Vibrationsdämpfer (101; 201; 301; 401; 501), der vorgesehen ist, um zwischen einer Vakuumpumpe (210) und einer Vakuumkammer (220) angeordnet zu sein, der zumindest folgende Merkmale aufweist:
eine erste zylindrische, hohle Komponente (103; 203; 303; 403; 503), angeordnet, um zumindest an einem ersten Ende derselben der Vakuumpumpe zugeordnet zu sein; und
eine zweite zylindrische, hohle Komponente (105; 205; 305; 405; 505), die mit dem ersten Element (103; 203; 303; 403; 503) in der axialen Richtung entlang einer Symmetrieachse (S) ausgerichtet ist und angeordnet ist, um an einem ersten Ende desselben der Vakuumkammer zugeordnet zu sein; wobei
die erste Komponente (103; 203; 303; 403; 503) an dem Ende gegenüberliegend zu dem ersten Ende einen toroidalen Halbsitz (115; 115'; 315) und eine Verbindungseinrichtung (111; 311) aufweist, geeignet zum axialen Binden der ersten Komponente an die zweite Komponente, entweder direkt oder indirekt durch die Zwischenposition von einer oder mehreren möglichen Zwischenkomponenten (119; 419, 431), und
wobei die zweite Komponente (105; 205; 305; 405; 505) an dem Ende gegenüberliegend zu dem ersten Ende einen toroidalen Halbsitz (117; 117'; 317) und eine Verbindungseinrichtung (113; 313) aufweist, geeignet zum axialen Binden der zweiten Komponente an die erste Komponente, entweder direkt oder indirekt durch die Zwischenposition von einer oder mehreren möglichen Zwischenkomponenten (119; 419, 431),
wobei zumindest ein toroidaler Ring (126, 326; 426; 526), der aus elastischem Material hergestellt ist, zwischen der ersten und der zweiten Komponente (103; 203; 303; 403; 503 / 105; 205; 305; 405; 505) des Dämpfers angeordnet ist,
wobei der toroidale Ring, der aus einem elastischen Material hergestellt ist, von einer ersten Ruhekonfiguration, wenn er einer Kompressionskraft ausgesetzt wird, die entlang der Symmetrieachse (S) gerichtet ist, die niedriger ist als eine voreingestellte Schwelle, in eine zweite komprimierte Konfiguration übergeht, wenn er einer Kompressionskraft ausgesetzt wird, die entlang einer Symmetrieachse (S) gerichtet ist und größer ist als die voreingestellte Schwelle,
**dadurch gekennzeichnet, dass**
die Verbindungseinrichtungen (111; 311/113; 313) die axiale Verbindung zwischen der ersten und der zweiten Komponente (103; 203; 303; 403; 503 / 105; 205; 305; 405; 505) garantieren, wenn der elastische toroidale Ring (126, 326; 426; 526) in der ersten Ruhekonfiguration ist; und dadurch, dass
der toroidale Ring (126, 326; 426; 526), der aus einem elastischen Material hergestellt ist, deformiert wird und die vakuumdichte, axiale Verbindung zwischen der ersten und der zweiten Komponente garantiert und jeglichen Kontakt zwischen den Verbindungseinrichtungen der ersten und der zweiten Komponente verhindert, wenn der elastische, toroidale Ring in der zweiten, komponierten Konfiguration ist.

2. Vibrationsdämpfer (301; 401) gemäß Anspruch 1, bei dem nur der elastische, toroidale Ring (326; 426) zwischen der ersten und der zweiten Komponente (303; 403/305; 405) angeordnet ist, wodurch der toroidale Halbsitz (315) der ersten Komponente und der toroidale Halbsitz (317) der zweiten Komponente zusammenarbeiten, um einen toroidalen Sitz zu definieren, in dem der toroidale Ring (326; 426), der aus einem elastischen Material hergestellt ist, aufgenommen und begrenzt wird.

3. Vibrationsdämpfer (301; 401) gemäß Anspruch 2, bei dem
die erste Komponente (303; 403) eine Verbindungseinrichtung (311) für die Verbindung mit der zweiten Komponente (305; 405) aufweist,
die Verbindungseinrichtung radiale Zähne (311a) aufweist, die gleichmäßig entlang der Oberfläche der ersten Komponente beabstandet sind, und bei dem
die zweite Komponente eine Verbindungseinrichtung (313) aufweist für die Verbindung mit der ersten Komponente, wobei die Verbindungseinrichtung radiale Zähne (313a) aufweist, die gleichmäßig entlang der Oberfläche der zweiten Komponente beabstandet sind und geeignet sind zum Ineingriffnehmen der radialen Zähne der ersten Komponente.

4. Vibrationsdämpfer (301; 401) gemäß Anspruch 2 oder 3, der ferner eine Einrichtung aufweist zum Verhindern der versehentlichen Drehung der ersten Komponente (303; 403) im Hinblick auf die zweite Komponente (305; 405).

5. Vibrationsdämpfer (101; 201; 501) gemäß Anspruch 1, bei dem eine oder mehrere Zwischenkomponenten (119; 419; 431) zusammen mit einem zusätzlichen, toroidalen Ring (131; 531, 541), der aus einem elastischen Material hergestellt ist, für jede der Zwischenkomponenten, ferner zwischen der ersten und der zweiten Komponente angeordnet sind.

6. Vibrationsdämpfer (101; 201; 501) gemäß Anspruch 5, bei dem
jede der Zwischenkomponenten (119; 419, 431) einen ersten toroidalen Halbsitz (123; 123') aufweist, der hin zu einem ersten Ende des Zwischenelements ausgerichtet ist, und einen zweiten toroidalen Halbsitz (129; 129'), der hin zu einem zweiten Ende des Zwischenelements ausgerichtet ist,
wobei sowohl der erste als auch zweite toroidale Halbsitz (123; 123'/129; 129') geeignet sind für ein Zusammenarbeiten mit dem toroidalen Halbsitz der ersten Komponente (103; 203; 503) oder mit dem toroidalen Halbsitz der zweiten Komponente (105; 205; 505) oder mit dem toroidalen Halbsitz einer anderen Zwischenkomponente (119; 419, 431) zum Definieren eines toroidalen Sitzes, der angeordnet ist zum Aufnehmen und Begrenzen von einem der toroidalen Ringe, die aus einem elastischen Material hergestellt sind.

7. Vibrationsdämpfer (101; 201; 501) gemäß Anspruch 5,
bei dem die erste Komponente (103; 203; 503) eine Verbindungseinrichtung (111) aufweist für die Verbindung mit einer der Zwischenkomponenten, wobei die Verbindungseinrichtung radiale Zähne (111a) aufweist, die gleichmäßig entlang der Oberfläche der ersten Komponente beabstandet sind,
wobei die zweite Komponente (105; 205; 505) eine Verbindungseinrichtung (113) aufweist für die Verbindung mit einer der Zwischenkomponenten, wobei die Verbindungseinrichtung radiale Zähne (113a) aufweist, die gleichmäßig entlang der Oberfläche der zweiten Komponente beabstandet sind, und
wobei die Zwischenkomponenten (119; 419, 431) Folgendes aufweisen
an dem ersten Ende eine erste Verbindungseinrichtung (121), die radiale Zähne (121a) aufweist, die gleichmäßig entlang der Oberfläche der Zwischenkomponente beabstandet sind und geeignet sind zum Ineingriffnehmen der radialen Zähne der ersten Komponente oder einer anderen Zwischenkomponente, und
an dem zweiten Ende eine zweite Verbindungseinrichtung (125), die radiale Zähne (125a) aufweist, die gleichmäßig entlang der Oberfläche der Zwischenkomponente beabstandet sind und geeignet sind zum Ineingriffnehmen der radialen Zähne der zweiten Komponente oder einer anderen Zwischenkomponente.

8. Vibrationsdämpfer (101; 201; 501) gemäß einem der Ansprüche 5 bis 7, der ferner eine Einrichtung aufweist zum Verhindern der versehentlichen gegenseitigen Drehung der ersten Komponente, der zweiten Komponente und der einen oder der mehreren Zwischenkomponenten im Hinblick aufeinander.

9. Vibrationsdämpfer (101; 301; 501) gemäß einem der Ansprüche 1 bis 8, bei dem die erste Komponente (103; 303; 503) einen Flansch (107) aufweist für die Verbindung mit einer oder der Vakuumpumpe.

10. Vibrationsdämpfer (201; 401) gemäß einem der Ansprüche 1 bis 8, bei dem die erste Komponente (203; 403) einstückig mit der Vakuumpumpe (210; 410) ist.

11. Vibrationsdämpfer (101; 301; 401; 501) gemäß einem der Ansprüche 1 bis 10, bei dem die zweite Komponente (105; 305; 405; 505) einen Flansch (109; 309; 509) für die Verbindung mit einer oder der Vakuumkammer aufweist.

12. Vibrationsdämpfer (201) gemäß einem der Ansprüche 1 bis 10, bei dem die zweite Komponente (205) einstückig mit der Vakuumkammer (220) ist.

13. Vibrationsdämpfer (101; 201; 301; 401; 501) gemäß einem der Ansprüche 1 bis 12, bei dem die toroidalen Halbsitze (115; 117; 123; 129) ein im Wesentlichen halbkreisförmiges Profil aufweisen.

14. Vibrationsdämpfer (101; 201; 301; 401; 501) gemäß einem der Ansprüche 1 bis 12, bei dem die toroidalen Halbsitze (115'; 117'; 123'; 129') ein im Wesentlichen "L"-förmiges Profil aufweisen.

15. Vibrationsdämpfer (101; 201; 301; 401; 501) gemäß einem der Ansprüche 1 bis 14, bei dem die voreingestellte Schwelle überschritten ist und der elastische, toroidale Ring (126; 326; 426; 526) in der zweiten, komprimierten Konfiguration ist, wenn der Dämpfer unter Vakuumbedingungen ist.

## Revendications

1. Amortisseur de vibrations (101; 201; 301; 401; 501), destiné à être disposé entre une pompe à vide (210) et une chambre à vide (220), comprenant au moins:
un premier composant creux cylindrique (103; 203; 303; 403; 503), disposé de manière à être associé à une première extrémité de ce dernier à ladite pompe à vide; et
un deuxième composant creux cylindrique (105; 205; 305; 405; 505), aligné sur ledit premier élément (103; 203; 303; 403; 503), dans la direction axiale le long d'un axe de symétrie (S) et disposé de manière à être associé à une première extrémité de ce dernier à ladite chambre à vide; où
ledit premier composant (105; 205; 305; 405; 505) comprend, à l'extrémité opposée à ladite première extrémité, un demi-siège toroïdal (115; 115'; 315) et un moyen de connexion (111; 311) convenant pour connecter axialement ledit premier composant audit deuxième composant soit directement, soit indirectement par l'interposition d'un ou de plusieurs possibles composants intermédiaires (119; 41; 431), et
ledit deuxième composant (105; 205; 305; 405; 505) comprend, à l'extrémité opposée à ladite première extrémité, un demi-siège toroïdal (117; 117 '; 317) et un moyen de connexion (113; 313) convenant pour connecter axialement ledit deuxième composant audit premier composant, soit directement, soit indirectement par l'interposition d'un ou de plusieurs possibles composants intermédiaires (119; 419; 431),
au moins une bague toroïdale (126; 326; 426; 526) réalisée en un matériau élastique, disposée entre ledit premier et ledit deuxième composant (103; 203; 303; 403; 503/105; 205; 305; 405; 505) dudit amortisseur,
ladite bague toroïdale réalisée en un matériau élastique passant d'une première configuration de repos si elle est soumise à une force de compression dirigée le long dudit axe de symétrie (S) inférieure à un seuil préréglé à une deuxième configuration comprimée si elle est soumise à une force de compression dirigée le long dudit axe de symétrie (S) supérieure audit seuil préréglé,
**caractérisé par le fait que**
ledit moyen de connexion (111; 311; 313) garantit la connexion axiale entre ledit premier et ledit deuxième composant (103; 203; 303; 403; 503/105; 205; 305; 405; 505) lorsque ladite bague toroïdale élastique (126; 326; 426; 526) se trouve dans ladite configuration de repos; et **par le fait que**
ladite bague toroïdale (126; 326; 426; 526) réalisée en un matériau élastique est déformée et garantit la connexion axiale étanche au vide entre ledit premier et ledit deuxième composant et empêche tout contact entre lesdits moyens de connexion dudit premier et dudit deuxième composant lorsque ladite bague toroïdale élastique se trouve dans ladite deuxième configuration comprimée.

2. Amortisseur de vibrations (301; 401) selon la revendication 1, dans lequel uniquement ladite bague toroïdale élastique (326; 426) est disposée entre ledit premier et ledit deuxième composant (303; 403/305; 405), ledit demi-siège toroïdal (315) dudit premier composant et ledit demi-siège (317) toroïdal dudit deuxième composant coopérant pour définir un siège toroïdal dans lequel et reçue et confinée ladite bague toroïdale (326; 426) réalisée en un matériau élastique.

3. Amortisseur de vibrations (301; 401) selon la revendication 2, dans lequel
ledit premier composant (303; 403) comprend des moyens de connexion (311) pour la connexion dudit deuxième composant (305; 405),
ledit moyen de connexion comprend des dents radiales (311a) équidistantes le long de la surface dudit premier composant, et dans lequel
ledit deuxième composant comprend un moyen de connexion (313) pour la connexion audit premier composant, ledit moyen de connexion comprenant des dents radiales (313a) équidistantes le long de la surface dudit deuxième composant et convenant pour engrener dans lesdites dents radiales dudit premier composant.

4. Amortisseur de vibrations (301; 401) selon la revendication 2 ou 3, comprenant par ailleurs un moyen pour empêcher la rotation accidentelle dudit premier composant (303; 403) par rapport audit deuxième composant (305; 405).

5. Amortisseur de vibrations (101; 201; 501) selon la revendication 1, dans lequel un ou plusieurs composants intermédiaires (119; 419, 431) ensemble avec une bague toroïdale additionnelle (131; 531, 541) réalisée en un matériau élastique pour chacun desdits composants intermédiaire sont par ailleurs disposés entre ledit premier et ledit deuxième composant.

6. Amortisseur de vibrations (101; 201; 501) selon la revendication 5, dans lequel
chacun desdits composants intermédiaires (119; 419, 431) comprend un premier demi-siège toroïdal (123; 123') orienté vers une première extrémité dudit élément intermédiaire et un deuxième demi-siège toroïdal (129; 129') orienté vers une deuxième extrémité dudit élément intermédiaire,
chacun desdits premier et deuxième demi-sièges toroïdaux (123; 123' / 129; 129') convenant pour coopérer avec le demi-siège toroïdal dudit premier composant (103; 203; 503) ou avec le demi-siège toroïdal dudit deuxième composant (105; 205; 505) ou avec le demi-siège toroïdal d'un autre composant intermédiaire (119; 419, 431) pour définir un siège toroïdal aménagé pour recevoir et confiner l'une desdites bagues toroïdales réalisées en un matériau élastique.

7. Amortisseur de vibrations (101; 201; 501) selon la revendication 5,
dans lequel ledit premier composant (103; 203; 503) comprend un moyen de connexion (111) pour la connexion à l'un desdits composants intermédiaires, ledit moyen de connexion comprenant des dents radiales (111a) équidistantes le long de la surface dudit premier composant,
dans lequel ledit deuxième composant (105; 205; 505) comprend un moyen de connexion (113) pour la connexion à l'un desdits composants intermédiaires, ledit moyen de connexion comprenant des dents radiales (113a) équidistantes le long de la surface dudit deuxième composant, et
dans lequel lesdits composants intermédiaires (119; 419, 431) comprennent
à ladite première extrémité, un premier moyen de connexion (121) comprenant des dents radiales (121 a) équidistantes le long de la surface dudit composant intermédiaire et convenant pour engrener dans lesdites dents radiales dudit premier composant ou d'un autre composant intermédiaire, et
à ladite deuxième extrémité, un deuxième moyen de connexion (125) comprenant des dents radiales (125a) équidistantes le long de la surface dudit composant intermédiaire et convenant pour engrener dans lesdites dents radiales dudit deuxième composant ou d'un autre composant intermédiaire.

8. Amortisseur de vibrations (101; 201; 501) selon l'une des revendications 5 à 7, comprenant par ailleurs un moyen pour empêcher la rotation mutuelle accidentelle dudit premier composant, dudit deuxième composant et desdits un ou plusieurs composants intermédiaires l'un par rapport à l'autre.

9. Amortisseur de vibrations (101; 301; 501) selon l'une quelconque des revendications 1 à 8, dans lequel ledit premier composant (103; 303; 503) comprend une bride (107) destinée à la connexion à une ou à ladite pompe à vide.

10. Amortisseur de vibrations (201; 401) selon l'une quelconque des revendications 1 à 8, dans lequel ledit premier composant (203; 403) est solidaire de ladite pompe à vide (210, 410).

11. Amortisseur de vibrations (101; 301; 401; 501) selon l'une quelconque des revendications 1 à 10, dans lequel ledit deuxième composant (105; 305; 405; 505) comprend une bride (109; 309; 509) pour la connexion à une ou à ladite chambre à vide.

12. Amortisseur de vibrations (201) selon l'une quelconque des revendications 1 à 10, dans lequel ledit deuxième composant (205) est solidaire de ladite chambre à vide (220).

13. Amortisseur de vibrations (101; 201; 301; 401; 501) selon l'une quelconque des revendications 1 à 12, dans lequel lesdits demi-sièges toroïdaux (115, 117, 123, 129) présentent un profil sensiblement semi-circulaire.

14. Amortisseur de vibrations (101; 201; 301; 401; 501) selon l'une des revendications 1 à 12, dans lequel lesdits demi-sièges toroïdaux (115'; 117'; 123'; 129') présentent un profil sensiblement en forme de "L".

15. Amortisseur de vibrations (101; 201; 301; 401; 501) selon l'une quelconque des revendications 1 à 14, dans lequel ledit seuil préréglé est excédé et ladite bague toroïdale élastique (126; 326; 426; 526) se trouve dans ladite deuxième configuration comprimée lorsque ledit amortisseur se trouve dans des conditions de vide.
